# EUROPÄISCHE PATENTSCHRIFT

(11) **EP 1 283 294 B1**
(45) Veröffentlichungstag und Bekanntmachung des Hinweises auf die Patenterteilung: **20.10.2010**
(21) Anmeldenummer: 02017594.9
(22) Anmeldetag: 07.08.2002
(51) Int. Cl.: D06M 10/02, B29C 65/08

(54) **Vorrichtung und Verfahren zur Thermofixierung, zur Verformung und/oder Glättung der Web- und/oder Maschenstruktur eines Werkstücks, insbesondere eines seil-, band- oder bahnförmigen Werkstücks**
Apparatus and process for heatsetting, for deforming and/or smoothing of the weft - and/or meshstructure of a workpiece, in particular of a workpiece in rope ,strip or bandlike form
Appareil et procédé pour la thermofixation, la déformation et/ou le lissage de la structure de tissage et/ou des mailles d'une pièce de travail, en particulier une pièce sous forme de corde, de ruban ou de bande

(30) Priorität: 07.08.2001 DE 10137938; 07.08.2001 DE 20112753 U
(43) Veröffentlichungstag der Anmeldung: 12.02.2003
(73) Patentinhaber: Sonotronic Nagel GmbH, 76307 Karlsbad (DE)
(72) Erfinder: Nagel, Dieter, 76307 Karlsbad-Ittersbach (DE)
(74) Vertreter: Leitner, Waldemar

(56) Entgegenhaltungen:
- EP-A- 0 589 222
- EP-A- 1 110 701
- DE-A- 1 957 216
- DE-A- 2 516 161
- DE-C- 969 291
- DE-C- 19 526 354
- DE-U- 20 112 753
- FR-A- 1 342 601
- GB-A- 2 120 497
- US-A- 3 392 219
- US-A- 3 525 653
- US-A- 3 836 413
- US-A- 3 867 232
- PATENT ABSTRACTS OF JAPAN vol. 014, no. 202 (C-0713), 25. April 1990 (1990-04-25) -& JP 02 041462 A (WATANABE KASEI KK), 9. Februar 1990 (1990-02-09)

## Beschreibung

Die Erfindung betrifft ein Verfahren zur Thermofixierung zur Glättung der Web- und/oder Maschenstruktur eines Werkstücks, insbesondere eines seil, band- oder bahnförmigen Werkstücks, welches Fasern mit einer teilkristallinen, übermolekularen Struktur aufweist, wobei die Fasern des Werkstücks zu deren Thermofixierung wärmebeaufschlagt werden, wobei Ultraschallschwingungen verwendet werden, sowie eine Vorrichtung zum Thermofixieren derartiger Werkstücke.

Thermofixier-Verfahren sind bekannt und dienen dazu, die Formstabilität von aus synthetischen Fasern und Geweben ausgebildeten Werkstücken zu verbessern sowie diese gegen unerwünschtes Einlaufen zu schützen. Die Thermofixierung derartiger Werkstücke wird dabei derart durchgeführt, daß diese Werkstücke in eine Wärmekammer eingebracht werden, wobei Temperatur und Verweilzeit durch die Art der Faser bestimmt werden. Vorzugsweise erfolgt in der Wärmekammer noch eine Streckung der Werkstücke, indem vorgesehen ist, daß die Einlaufgeschwindigkeit der band- oder bahnförmigen Werkstücke kleiner ist als deren Auslaufgeschwindigkeit. Nach dem Durchlaufen dieser Wärmestufe wird der in der Wärmekammer erreichte Zustand fixiert, indem das Werkstück in eine Kühlstufe eingebracht wird.

Die bekannten Verfahren zum Thermofixieren zur Thermofixierung zur Verformung und/oder Glättung der Web- und/oder Maschenstruktur derartiger Werkstücke sowie die hierzu verwendeten Vorrichtungen besitzen den Nachteil, daß die jeweils verwendeten Heizkammern einen hohen Platzbedarf aufweisen, welcher in nachteiliger Art und Weise dazu führt, daß bekannte Thermofixier-Vorrichtungen voluminös bauen.

Ein weiterer, noch viel gravierenderer Nachteil ist, daß die Heizkammern eine lange Vorheizzeit und/oder eine große Abkühlzeit benötigen. Dies führt in nachteiliger Art und Weise dazu, daß bei einem Defekt, insbesondere bei einem Reißen des band- oder bahnförmigen Werkstücks in der Heizkammer, diese zuerst abgekühlt werden müssen, bevor es möglich ist, den Defekt zu beheben, insbesondere eine neue Werkstückbahn in die Heizkammer einzuführen. An diesen Umrüstvorgang schließt sich dann wiederum in nachteiliger Art und Weise ein erneuter Aufheizvorgang der zum Umrüsten abgekühlten Heizkammer an.

Ein weiterer Nachteil der bekannten Thermofixier-Verfahren zur Verformung und/oder Glättung der Web- und/oder Maschenstruktur eines Werkstücks besteht darin, daß sie einen relativ hohen Energieverbrauch aufweisen, nicht zuletzt dadurch, daß die Heizkammern voluminös bauen, so daß für eine entsprechende Wärmebeaufschlagung des Werkstücks nicht nur die Energie benötigt wird, die zum Behandeln des Werkstücks erforderlich ist, sondern darüber hinaus noch ein großer Anteil der benötigten Gesamtenergie zum Aufheizen der Kammern aufzuwenden ist.

Ein Verfahren mit den Merkmalen des Oberbegriffs des Anspruchs 1 ist aus der DE-C-969 291 bekannt. Diese Druckschrift betrifft ein Verfahren zum Fixieren von Textilgut aus vollsynthetischem Material, wobei das Textilgut zwecks Herabsetzung der Fixiertemperatur der Beschallung mit Ultraschallwellen unterworfen wird. Hierbei ist vorgesehen, dass die Ultraschallbeaufschlagung des zu fixierenden Guts im Verein mit einer der bisher üblichen Wärmebehandlungen, also mittels einer Erwärmung mittels trockener Mittel wie Gase, Heißdampf oder flüssigem Metall, oder feuchter Mittel (Sattampf, erhitzte Flüssigkeiten) erfolgt. Nach der Auffassung dieser Druckschrift soll durch die Ultraschallbehandlung erreicht werden, dass die zur Erreichung einer guten Fixierwirkung erforderlichen Temperaturen wesentlich niedriger liegen, wenn das Gut in erhitztem Zustand mit Ultraschall behandelt wird.

Es ist also bei dem aus der vorgenannten Druckschrift bekannten Verfahren eine Kombination einer Wärmebehandlung und Ultraschall vorgesehen. Eine derartige Wärmebehandlung soll aber gerade von der Erfindung vermieden werden.

Es ist daher Aufgabe der vorliegenden Erfindung, eine Vorrichtung und ein Verfahren der eingangs genannten Art derart weiterzubilden, daß eine einfachere Thermofixierung zur Glättung der Web- und/oder Maschenstruktur der eingangs definierten Werkstücke möglich ist, wobei insbesondere die erfindungsgemäße Vorrichtung und das erfindungsgemäße Verfahren energiesparender arbeiten sollen.

Diese Aufgabe wird durch das erfindungsgemäße Verfahren dadurch gelöst, daß die zur Thermofixierung zur Glättung der Web- und/oder Maschenstruktur des Werkstücks benötigte Energie durch die Ultraschallschwingungen bereitgestellt wird, daß an einer ersten Seite des Werkstücks mindestens eine Sonotrode angeordnet wird, dass diese mindestens eine Sonotrode durch einen Spalt von einer an einer zweiten Seite des Werkstücks angeordneten Sonotrode oder einem Amboß getrennt wird, und daß das Werkstück durch den Spalt geführt wird.

Das erfindungsgemäße Verfahren zeichnet sich durch seinen geringen Energieverbrauch aus, da es durch die erfindungsgemäß vorgesehene Einbringung der Wärmeenergie durch Ultraschallschwingungen nicht mehr erforderlich ist, voluminös bauende und energiefressende Heizkammem zu verwenden.

Ein weiterer Vorteil des erfindungsgemäßen Verfahrens besteht darin, daß in vorteilhafter Art und Weise kein Vorheizen der Vorrichtung zur Thermofixierung zur Glättung der Web- und/oder Maschenstruktur mehr erforderlich ist, da es das erfindungsgemäße Verfahren ermöglicht, die von einer Sonotrode einer Ultraschalleinrichtung erzeugten Ultraschallschwingungen direkt zum Werkstück zu leiten. Da es das erfindungsgemäße Verfahren nicht erfordert, Heizkammem zu erwärmen bzw. abzukühlen, sind in vorteilhafter Art und Weise keine Vorwärm- bzw. Abkühlzeiten bei der Verfahrensdurchführung zu berücksichtigen, so daß ein schnelles Umrüsten und ein schneller Werkstückwechsel, insbesondere bei Defekten, leicht möglich ist.

Vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: eine schematische Vorderansicht eines ersten Ausführungsbeispiels einer Vorrichtung zur Durchführung eines Thermofixier-Verfahrens,
- Figur 2: die Vorrichtung der Figur 1 in einer Seitenansicht,
- Figur 3: die Vorrichtung der Figuren 1 und 2 in einer Draufsicht,
- Figur 4: ein zweites Ausführungsbeispiel der Vorrichtung in einer Vorderansicht, und
- Figur 5: das zweite Ausführungsbeispiel in einer Draufsicht.

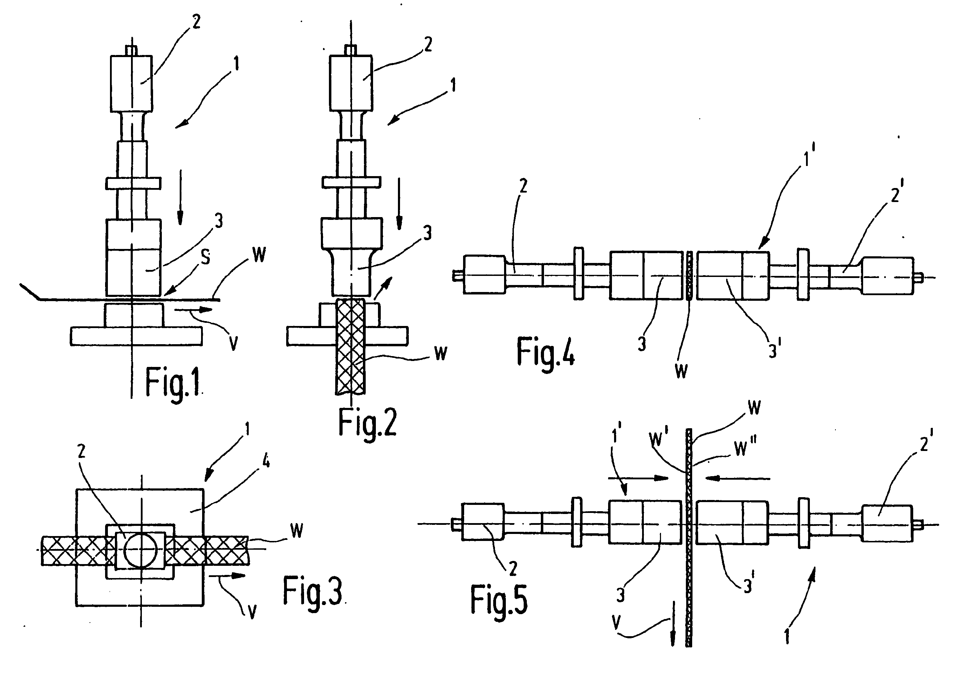

Das Verfahren zur Thermofixierung zur Verformung und/ oder Glättung der Webund/oder Maschenstruktur von seil-, band- oder bahnförmigen Werkstücken, die Fasern mit einer teilkristallinen, übermolekularen Struktur aufweisen, wird nun im folgenden anhand des in den Figuren 1 bis 3 schematisch dargestellten ersten Ausführungsbeispiels einer Vorrichtung erläutert.

Die allgemein mit 1 bezeichnete Vorrichtung gliedert sich prinzipiell in eine an und für sich bekannte und daher nicht mehr näher beschriebene Ultraschalleinrichtung 2 mit einer Sonotrode 3, welche über einem Amboß 4 angeordnet ist. In einen Spalt S zwischen Sonotrode 3 und Amboß 4, welcher während des Betriebs der Ultraschalleinrichtung 2 vorzugsweise konstant gehalten wird, ist das zu thermofixierende Werkstück W durchführbar und durch die von der Sonotrode 3 emittierten Ultraschallschwingungen mit Ultraschallenergie beaufschlagbar.

In den Figuren 1-3 nicht gezeigt sind eine an und für sich bekannte Zuführeinrichtung, in der das zu behandelnde seil-, band- oder bahnförmige Werkstück W aufgenommen ist und die das Werkstück W mit einer definierten Vorschubgeschwindigkeit der Vorrichtung 1 zuführt, sowie eine Abtransporteinrichtung, deren Arbeitsgeschwindigkeit kleiner, gleich oder größer als die Zuführgeschwindigkeit ist, so daß das band- oder bahnförmige Werkstück W bei seinem Durchlauf durch die Vorrichtung 1 infolge der unterschiedlichen bzw. gleichen Geschwindigkeiten der beiden vorgenannten Transporteinrichtungen gestreckt oder geschrumpft bzw. gleichgehalten wird.

Die Energiebeaufschlagung des Werkstücks W durch die von der Sonotrode 3 emittierten Ultraschallschwingungen führt nun zu einer Erwärmung der Fasern des Werkstücks W, was bewirkt, daß sich die Moleküle der Fasern ausrichten und somit die bekannten Vorteile von zwecks Verformung und/oder Glättung der Web- und/oder Faserstruktur thermofixierten Werkstücken erzielt werden.

Ist nun die Einlaufgeschwindigkeit des Werkstücks kleiner als dessen Auslaufgeschwindigkeit, wird das Werkstück zwischen den beiden Transporteinrichtungen verstreckt und das Werkstück steht im Bereich der Ultraschallbeaufschlagung durch die Sonotrode 3 unter einer mehr oder minder starken Spannung. Dies führt in Verbindung mit der Ultraschallbeaufschlagung zu einer Ausrichtung der molekularen Struktur des zu behandelnden Werkstücks.

Ist nun die Einlaufgeschwindigkeit gleich der Auslaufgeschwindigkeit, so ist das Werkstück im Bereich der Ultraschallbeaufschlagung unter einer gleichmäßigen Spannung, wodurch eine Verfestigung und/oder eine Glättung der Oberfläche des Werkstücks erzielbar ist.

Im Fall einer gegenüber der Auslaufgeschwindigkeit größeren Einlaufgeschwindigkeit, also bei einem zugspannungsfreien Werkstück-Transport, wird das Werkstück im Ultraschall-Bereich geschrumpft. Hierdurch ist es in vorteilhafter Art und Weise möglich, den sogenannten Wascheinsprung zu mindern oder zu beseitigen.

Durch die oben genannten Maßnahmen wird bewirkt, daß die Web- und/oder Maschenstruktur durch die Ultraschallbehandlung in ihrer Struktur und/oder in ihrem Gefüge gleichmäßiger wird. Produktionsbedingte Unterschiede des Werkstück-Materials können hierdurch in vorteilhafter Art und Weise ausgeglichen werden und das Bestreben des Werkstücks, sich aufzurollen, wird vermindert.

Die Verwendung von Ultraschallschwingungen zur Zuführung der zum Thermofixieren des Werkstücks W erforderlichen Energie besitzt den Vorteil, daß das beschriebene Verfahren nur einen Bruchteil der Energie verbraucht, als dies bei bekannten Verfahren, bei denen die Wärmebeaufschlagung des Werkstücks W in einer Heizkammer erfolgt, der Fall ist, da die zum Thermofixieren erforderliche Energie dem Werkstück W in vorteilhafter Art und Weise direkt über die von der Sonotrode 3 emittierten Ultraschallschwingungen zugeführt wird und nicht - wie bei bekannten Verfahren - indirekt, indem eine Heizkammer aufgeheizt wird. Diese unmittelbare, direkte Energiezufuhr der Ultraschallenergie durch die Sonotrode 3 besitzt desweiteren den Vorteil, daß beim beschriebenen Verfahren in vorteilhafter Art und Weise keine Aufheizzeiten auftreten. Da die Zuführung der zum Thermofixieren erforderlichen Ultraschallenergie durch die Sonotrode 3, welche sich selbst nicht wesentlich erwärmt, durchführbar ist, sind beim beschriebenen Verfahren sowie bei der danach arbeitenden Vorrichtung 1 keine Abkühlzeiten zu beachten, so daß ein schnelles Umrüsten leicht durchführbar ist.

In den Figuren 4 und 5 wird ein zweites Ausführungsbeispiel einer allgemein mit 1' bezeichneten Vorrichtung dargestellt, welche sich von der Vorrichtung 1 des ersten Ausführungsbeispiels der Figuren 1-3 dadurch unterscheidet, daß anstelle des Ambosses 4 eine zweite Ultraschalleinrichtung 2' angeordnet ist, deren Aufbau im wesentlichen demjenigen der Ultraschalleinrichtung 2 entspricht, so daß das Werkstück W von beiden Seiten, und zwar von einer ersten Seite W von der Sonotrode 3 der Ultraschalleinrichtung 2 und von einer zweiten Seite W' von der Sonotrode 3' der Ultraschalleinrichtung 2' mit Ultraschallenergie beaufschlagbar ist. Eine derartige Maßnahme besitzt den Vorteil, daß hierdurch in besonders einfacher Art und Weise eine doppelseitige Behandlung des Werkstücks W ermöglicht wird.

Bei den beiden oben beschriebenen Ausführungsbeispielen wird davon ausgegangen, daß die Thermofixierung des seil-, bahn- oder bandförmigen Werkstücks W durch eine Sonotrode 3 oder durch zwei gegenüberliegende Sonotroden 3, 3' durchgeführt wird. Es ist aber auch möglich, vorzugsweise quer zur Vorschubrichtung V des Werkstücks W mehrere Sonotroden 3, 3', entweder nur an einer Seite W bzw. W' oder an beiden Seiten W, W" des Werkstücks W anzuordnen, wodurch es in vorteilhafter Art und Weise möglich ist, auch breite Werkstücke W durch das beschriebene Verfahren zu thermofixieren.

Ebenfalls ist es möglich, daß in Vorschubrichtung V des Werkstücks W in Serie mehrere Sonotroden 3, 3', wiederum entweder nur an einer Seite W, W" des Werkstücks W oder an beiden Seiten W', W" anzuordnen, so daß der Thermofixier-Vorgang des Werkstücks W auf mehrere Ultraschalleinrichtungen 2, 2' verteilt wird.

Dies ermöglicht es, einerseits mit einer geringeren Ultraschall-Energie pro Sonotrode zu arbeiten, wodurch bewirkt wird, daß die durch den Ultraschalleintrag bewirkte Thermofixierung zur Verformung und/oder Glättung der Web- und/oder Maschenstruktur des Werkstücks W im wesentlichen nur auf die Oberfläche des Werkstücks W beschränkt bleibt, wodurch eine Glättung der Oberfläche und somit eine Erhöhung der Abriebfestigkeit bei ansonsten unveränderter Materialstruktur erzielt wird. Außerdem wird hierdurch eine schonendere Behandlung des Werkstücks ermöglicht.

Andererseits erlaubt es die vorstehend beschriebene Anordnung mehrerer Sonotroden 3, 3' hintereinander, die Intensität des Ultraschall-Eintrags zu erhöhen, wodurch unter anderem eine Erhöhung der Arbeitsgeschwindigkeit des Verfahrens und der Vorrichtung erzielbar ist.

Auch ist es möglich, daß durch eine entsprechende Verschiebeeinrichtung (nicht gezeigt) eine oder mehrere Sonotroden 3, 3' quer zur Vorschubrichtung des Werkstücks W verschiebbar angeordnet sind. Eine derartige Maßnahme ist insbesondere bei sogenannter Breitware, also bei sehr breiten bahnförmigen Werkstücken, von Vorteil, da hierdurch auch bei einer derartigen Breitware die vorstehend beschriebenen Vorteile des beschriebenen Verfahrens, nämlich die Verminderung des Wascheinsprungs, eine Vergleichmäßigung, Verfestigung und/oder Glättung insbesondere der Oberfläche des Werkstücks sowie eine Verbesserung der Abriebfestigkeit des Werkstücks erzielbar ist.

Natürlich ist es auch möglich, anstelle der vorstehend beschriebenen Sonotroden mit einer im wesentlichen planen Arbeitsflächen auch Form-Sonotroden, also Sonotroden, deren Arbeitsfläche eine definierte Form, wie z. B. eine Halbschale, aufweist, zu verwenden. Eine derartige Maßnahme ist insbesondere bei seilförmigen Werkstücken von Vorteil, da hierdurch auch bei Werkstücken mit einem runden oder ovalen Querschnitt eine Thermofixierung entlang ihres gesamten Umfangs erzielbar ist.

Bei der vorstehenden Beschreibung wurde davon ausgegangen, daß die Sonotroden 3, 3' oder die Sonotroden 3, 3' und ihr gegenüberliegender Amboß mit Spaltmaß zueinander beabstandet angeordnet ist. Es ist natürlich auch möglich dieses Spaltmaß auf ein geringeres Maß zu verringern, so daß das zwischen die beiden gegenüberliegenden Sonotroden 3, 3' oder zwischen einer Sonotrode 3, 3' und dem ihr gegenüberliegenden Amboß geführte Werkstück einer mehr oder minder starken Druckbeaufschlagung durch die Sonotroden 3', 3 ausgesetzt wird. Eine derartige Maßnahme bewirkt einen "Bügeleffekt", wodurch die Glättung der Oberfläche und die damit verbundene Verbesserung der Abriebfestigkeit noch verstärkt werden kann.

Durch die Annäherung mindestens einer Sonotrode 3, 3' an das Werkstück W kann der Energieeintrag in das Werkstück W gesteigert werden, woraus sich in vorteilhafter Art und Weise eine höhere Arbeitsgeschwindigkeit ergibt.

Vorzugsweise ist noch vorgesehen, daß bei der Vorrichtung 1 eine Regelung der Amplitude der Ultraschall-Schwingungen erfolgt und zwar dahingehend, daß die Amplitude der Ultraschall-Schwingungen verringert wird, wenn sich die Sonotroden 3, 3' durch eine Erwärmung ausdehnen, so daß in vorteilhafter Art und Weise ein eingestelltes Energie-/Weg-Fenster eingehalten wird.

Überraschenderweise hat sich herausgestellt, daß eine Befeuchtung des Werkstücks zu verbesserten Ergebnissen bei der Thermofixierung zwecks Verformung und/oder Glättung der Web- und/oder Maschenstruktur der Werkstücke führt.

Von Vorteil ist desweiteren, daß vorgesehen wird, daß die Arbeitsfläche der Sonotroden 3, 3' mit Teflon beschichtet wird. Dies führt in vorteilhafter Art und Weise zu einer Erhöhung und Ausrichtung des Energieeintrags.

Abschließend soll noch erwähnt werden, daß das beschriebene Verfahren und die beschriebene Vorrichtung insbesondere zur Herstellung von Gurten für Kraftfahrzeug-Rückhaltesysteme geeignet sind.

## Patentansprüche

1. Verfahren zur Thermofiexierung zur Glättung der Web- und/oder Maschenstruktur eines Werkstücks, insbesondere eines sell, band- oder bahnförmigen Werkstücks (W), welches Fasern mit einer teilkristallinen, übermolekularen Struktur aufweist, wobei die Fasern des Werkstücks (W) zu deren Thermofixierung wärmebeaufschlagt werden, wobei Ultraschallschwingungen verwendet werden, **dadurch gekennzeichnet, dass** die zur Thermofixierung zur Glättung der Web- und/oder Maschenstruktur des Werkstücks (W) benötigte Energie durch die Ultraschallschwingungen bereitgestellt wird, dass an einer ersten Seite (W') des Werkstücks (W) mindestens eine Sonotrode (3) angeordnet wird, dass diese mindestens eine Sonotrode (3) durch einen Spalt (S) von einer an einer zweiten Seite (W") des Werkstücks (W) angeordneten Sonotrode (3') oder einen Amboß (4) getrennt wird, und dass das Werkstück (W) durch den Spalt (S) geführt wird.

2. Verfahren nach Anspruch 1, **dadurch gekennzeichnet, dass** zur Erzeugung der Ultraschallschwingungen mindestens eine Sonotrode (3, 3') einer Ultraschalleinrichtung (2, 2') verwendet wird.

3. Verfahren nach einem der vorangehenden Ansprüche, **dadurch gekennzeichnet, dass** mindestens zwei Sonotroden (3, 3') im wesentlichen quer zur Vorschubrichtung (V) des Werkstücks (W) angeordnet werden.

4. Verfahren nach einem der vorangehenden Ansprüche, **dadurch gekennzeichnet, dass** mindestens zwei Sonotroden (3, 3') hintereinander im Vorschubrichtung (V) des Werkstücks (W) angeordnet werden.

5. Verfahren nach einem der Ansprüche 1-4, **dadurch gekennzeichnet, dass** an beiden Seiten (W', W") des Werkstücks (W) jeweils mindestens eine Sonotrode (3, 3') angeordnet wird.

6. Verfahren nach Anspruch 1, **dadurch gekennzeichnet, dass** während des Thermofixier-Vorgangs der Spalt (S) im wesentlichen konstant gehalten wird.

7. Verfahren nach einem der vorangehenden Ansprüche, **dadurch gekennzeichnet, dass** das Werkstück vor der Ultraschallbeaufschlagung befeuchtet wird.

8. Vorrichtung zur Thermofixierung zur Glättung der Web und/oder Maschenstruktur eines Werkstücks (W), insbesondere eines seil-, band- oder bahnförmigen Werkstücks (W), die eine Zufuhreinrichtung für das Werkstück (W) aufweist, durch die das Werkstück (W), mindestens einer Ultraschalleinrichtung (2, 2') zur Erzeugung von Ultraschallschwingungen, mit denen das zu thermofixierende Werkstück (W) beaufschlagbar ist, mit einer definierten Vorschubgeschwindigkeit zuführbar ist, dass die mindestens eine Ultraschalleinrichtung (2;2') die zur Thermofixierung zur Glättung der Web- und/oder Faserstruktur des seil-, band- oder bahnförmigen Werkstücks (W) benötigte Energie erzeugt, dass die mindestens eine Ultraschalleinrichtung (2, 2') mindestens eine Sonotrode (3, 3') aufweist, der mindestens einen Sonotrode (3) gegenüberliegend und durch einen Spalt (S) getrennt eine weitere Sonotrode (3') oder einen Amboß (4) angeordnet ist, und dass die Vorrichtung (1) eine Abtransporteinrichtung aufweist, deren Arbeitsgeschwindigkeit kleiner, gleich oder größer als die Zuführgeschwindigkeit des Werkstücks (W) ist, so dass das Werkstück (W) bei seinem Durchlauf durch die Vorrichtung (1) zur Thermofixierung des Werkstücks (1) in Folge der unterschiedlichen bzw. gleichen Geschwindigkeiten der beiden vorgenannten Transporteinrichtungen gestreckt oder geschrumpft oder gleichgehalten wird.

9. Vorrichtung nach Anspruch 8, **dadurch gekennzeichnet, dass** die weitere Sonotrode (3') Teil einer weiteren Ultraschalleinrichtung (2') ist.

10. Vorrichtung nach einem der vorangehenden Ansprüche, **dadurch gekennzeichnet, dass** die Vorrichtung mindestens zwei Sonotroden (3, 3') aufweist,
die in Vorschubrichtung (V) des Werkstücks (W) hintereinander angeordnet sind.

11. Vorrichtung nach einem der vorangehenden Ansprüche, **dadurch gekennzeichnet, daß** die Vorrichtung (1,1') mindestens zwei Sonotroden (3, 3') aufweist, die im wesentlichen quer zur Vorschubrichtung (V) des Werkstücks (W) angeordnet sind.

12. Vorrichtung nach einem der vorangehenden Ansprüche, **dadurch gekennzeichnet, daß** mindestens eine Sonotrode (3, 3') eine Beschichtung aus Teflon aufweist.

13. Vorrichtung nach einem der vorangehenden Ansprüche, **dadurch gekennzeichnet, daß** mindestens eine Sonotrode (3, 3') als eine Form-Sonotrode ausgebildet ist.

## Claims

1. Process for heat-setting, for smoothing of the weft- and/or mesh-structure of a work piece, in particular of a work piece in a rope, strip or band like form, which has got fibres with a semi-crystalline, overmolecular structure, in which the fibres of the work piece (W) are heat-treated for their heat-setting, whereby ultrasonic vibrations are used, **characterized in that** the energy required for heat-setting for smoothing of the weft- and/or mesh-structure of the work piece (W) is provided by the ultrasonic vibrations, that on a first side (W') of the work piece (W) at least one sonotrode (3) is arranged, that the at least one sonotrode (3) is separated by a gap (S) from a further sonotrode (3') or an anvil (4) arranged on a second side (W") of the work piece (W), and that the work piece (W) is lead through the gap (S).

2. Process according to claim 1, **characterized in that** for generating the ultrasonic vibrations at least one sonotrode (3, 3') of an ultrasonic unit (2, 2") is used.

3. Process according to one of the previous claims, **characterized in that** at least two sonotrodes (3, 3') are arranged essentially traverse to the feed direction (V) of the work piece (W).

4. Process according to one of the previous claims, **characterized in that** at least two sonotrodes (3, 3') are arranged in series in the feed direction (V) of the work piece (W).

5. Process according to one of the claims 1-4, **characterized in that** on both sides (W', W") of the work piece (W) at least one sonotrode (3; 3') is arranged.

6. Process according to claim 1, **characterized in that** during the heat-setting the gap (S) is maintained essentially constant.

7. Process according to one of the previous claims, **characterized in that** the work piece is moisturized prior to impacting it with ultrasonic vibrations.

8. Apparatus for heat-setting, for smoothing of the weft- and/or mesh-structure of a work piece (W), in particular a work piece (W) in a rope, strip or band like form, having a feeding unit for the work piece (W), by which the work piece (W) can be lead with a defined feed velocity to at least one ultrasonic unit (2, 2') generating the ultrasonic vibrations by which the work piece (W) to be heat-setted is impacted, that the at least one ultrasonic unit (2, 2') generates the energy required for the heat-setting for smoothing of the weft- and/or mesh-structure of the work piece (W) being rope, strip or band like, that the at least one ultrasonic unit (2, 2') has got at least one sonotrode (3, 3'), that the at least one further sonotrode (3') or an anvil (4) is oppositely arranged and separated by the gap (S) to said first sonotrode (3), and that the apparatus (1) has got an unloading unit, the working velocity of which is smaller, equal or greater respectively than the feeding velocity of the work piece (W), so that the work piece (W) is, during its way through the apparatus (1) for the heat-setting of the work piece (W), due to the different and equal velocities of the two aforementioned transport units respectively, stretched or shrunken or maintained.

9. Apparatus according to claim 6, **characterized in that** the further sonotrode (3') is part of a further ultrasonic unit (2').

10. Apparatus according to one of the previous claims, **characterized in that** the apparatus has got at least two sonotrodes (3, 3'), which are arranged in series in the feed direction (V) of the work piece (W).

11. Apparatus according to one of the previous claims, **characterized in that** the apparatus (1, 1') has got at least two sonotrodes (3, 3'), which are arranged traverse to the feed direction (V) of the work piece (W).

12. Apparatus according to one of the previous claims, **characterized in that** at least one sonotrode (3, 3') has got a coating of Teflon.

13. Apparatus according to one of the previous claims, **characterized in that** at least one sonotrode (3, 3') is provided as a form-sonotrode.

## Revendications

1. Procédé de thermofixation pour le lissage de la structure de tissage et/ou de maillage d'une pièce, en particulier d'une pièce (W) en forme de corde, de ruban ou de bande, laquelle présente des fibres ayant une structure partiellement cristalline, surmoléculaire, les fibres de la pièce (W) étant exposées à la chaleur pour leur thermofixation, des vibrations ultrasoniques étant employées, **caractérisé en ce que** l'énergie nécessitée pour la thermofixation pour le lissage de la structure de tissage et/ou de maillage de la pièce (W) est obtenue par les vibrations ultrasoniques, **en ce que** sur un premier côté (W') de la pièce (W) est disposée au moins une sonotrode (3), **en ce que** ladite ou lesdites sonotrodes (3) sont séparées par un interstice (S) d'une sonotrode (3') disposée sur un deuxième côté (W" ) de la pièce (W) ou d'une enclume (4), et **en ce que** la pièce (W) est passée par l'interstice (S).

2. Procédé selon la revendication 1, **caractérisé en ce qu'**au moins une sonotrode (3, 3') d'un dispositif ultrasonique (2, 2') est utilisée pour générer les vibrations ultrasoniques.

3. Procédé selon l'une des revendications précédentes, **caractérisé en ce qu'**au moins deux sonotrodes (3, 3') sont disposées sensiblement transversalement à la direction d'avance (V) de la pièce (W).

4. Procédé selon l'une des revendications précédentes, **caractérisé en ce qu'**au moins deux sonotrodes (3, 3') sont disposées l'une après l'autre dans la direction d'avance (V) de la pièce (W).

5. Procédé selon l'une des revendications 1 à 4, **caractérisé en ce qu'**au moins une sonotrode (3, 3') est disposée sur chacun des deux côtés (W', W") de la pièce (W).

6. Procédé selon la revendication 1, **caractérisé en ce que** l'interstice (5) est maintenu sensiblement constant pendant le processus de thermofixation.

7. Procédé selon l'une des revendications précédentes, **caractérisé en ce que** la pièce est humidifiée avant d'être exposée aux ultrasons.

8. Dispositif de thermofixation pour le lissage de la structure de tissage et/ou de fibres d'une pièce, en particulier d'une pièce (W) en forme de corde, de ruban ou de bande, lequel comporte un dispositif d'amenée pour la pièce (W), par lequel la pièce (W) peut être amenée avec une vitesse d'avance définie vers au moins un dispositif ultrasonique (2, 2') destiné à générer des vibrations ultrasoniques auxquelles la pièce (W) à fixer est exposable, en ce que le ou les dispositifs ultrasoniques (2, 2') génèrent l'énergie nécessitée pour la thermofixation pour le lissage de la structure de tissage et/ou de fibres de la pièce (W), en ce que le ou les dispositifs ultrasoniques (2, 2') comportent une sonotrode (3), laquelle est opposée à au moins une sonotrode (3), ladite ou lesdites sonotrodes (3) étant séparées par un interstice (S) d'une autre sonotrode (3') ou d'une enclume (4), et en ce que le dispositif (1) comprend un dispositif de transport dont la vitesse de travail est inférieure, égale ou supérieure à la vitesse d'amenée de la pièce (W), si bien que la pièce (W) est étirée, contactée ou maintenue telle quelle lors de son passage par le dispositif (1) pour la thermofixation de la pièce (W), du fait des vitesses différentes ou égales des deux dispositifs de transport

9. Dispositif selon la revendication 8, **caractérisé en ce que** l'autre sonotrode (3') fait partie d'un autre dispositif ultrasonique (2').

10. Dispositif selon l'une des revendications précédentes, **caractérisé en ce que** le dispositif comporte au moins deux sonotrodes (3, 3'), disposées successivement dans la direction d'avance (V) de la pièce (W).

11. Dispositif selon l'une des revendications précédentes, **caractérisé en ce que** le dispositif (1, 1') comporte au moins deux sonotrodes (3, 3'), disposées sensiblement transversalement à la direction d'avance (V) de la pièce (W).

12. Dispositif selon l'une des revendications précédentes, **caractérisé en ce qu'**au moins une sonotrode (3, 3') présente un revêtement en Téflon.

13. Dispositif selon l'une des revendications précédentes, **caractérisé en ce qu'**au moins une sonotrode (3, 3') est réalisée comme une sonotrode de forme.
